Europäisches Patentamt

European Patent Office

Office européen des brevets

(19)

(11) Numéro de publication: **0 175 702 B1**

(12)

# FASCICULE DE BREVET EUROPEEN
## publi e en application de l'article
## 158, paragraphe 3 de la CH0

(45) Date de publication de fascicule du brevet:
**21.08.91**

(21) Numéro de dépôt: **85900962.3**

(22) Date de dépôt: **28.02.85**

(86) Numéro de dépôt internationale :
**PCT/BE85/00004**

(87) Numéro de publication internationale :
**WO 85/04113 (26.09.85 85/21)**

Jointe à la demande no. 85870032.1/0158620
(numéro de dépôt/numéro de publication de la
demande européenne) par décision du 24.03.87.

(51) Int. Cl.⁵: **B01D 33/17**, B01D 33/327,
B01D 33/82

(54) **PERFECTIONNEMENT APPORTE AUX FILTRES ROTATIFS SOUS VIDE A PLAN DE FILTRATION HORIZONTAL.**

(30) Priorité: **14.03.84 LU 85251**

(43) Date de publication de la demande:
**02.04.86 Bulletin 86/14**

(45) Mention de la délivrance du brevet:
**21.08.91 Bulletin 91/34**

(84) Etats contractants désignés:
**AT BE CH DE FR GB IT LI LU NL SE**

(56) Documents cités:
FR-A- 999 442      FR-A- 2 326 962
FR-A- 2 334 401     US-A- 2 684 158
US-A- 3 072 136     US-A- 3 361 262
US-A- 4 172 791     US-A- 4 330 404

T260/85, Journal officiel OEB 4/1989, p. 105

(73) Titulaire: **Prayon Développement Société anonyme**
**rue Joseph Wauters, 144**
**B-4130 Engis(BE)**

(72) Inventeur: **DAVISTER, Armand, Laurent**
**Quai de la Boverie 98/091**
**B-4020 Liège(BE)**
Inventeur: **MARTIN, Georges-François**
**Chaussée de Ramioul 325**
**B-4120 Flémalle(BE)**

(74) Mandataire: **Bosch, Henry et al**
**Office VAN MALDEREN Boulevard de la Sauvenière, 85/042**
**B-4000 Liège(BE)**

## Description

La présente invention est relative à un perfectionnement apporté aux filtres rotatifs sous vide à plan de filtration horizontal. Ledit perfectionnement concerne plus particulièrement le distributeur à axe vertical dont sont équipés ces filtres et dont les fonctions sont de récolter, répartir et stocker les fluides provenant des éléments filtrants mobiles du filtre vers le ou les dispositifs fixes d'évacuation de ces fluides.

Les filtres à plan de filtration horizontal concernés par l'invention et actuellement connus, peuvent comporter soit une surface annulaire dite "table filtrante", divisée en éléments filtrants juxtaposés et immobilisés entre eux, donc recevant un gâteau de filtration continu, soit une surface filtrante constituée de cellules filtrantes juxtaposées mais basculables individuellement.

Bien que la présente description de l'invention s'appuie sur l'exemple d'application d'un filtre du type à cellules basculables, elle n'est pas limitée à ce type de filtre mais s'applique également aux autres types de filtre connus en soi.

Comme déjà décrit dans les documents de brevet FR-A-999.442, US-A-2.684.158, US-A-3.072.136 FR-A-2.326. 962, US-A-4.172.791, US-A-4.330.404 et dans l'équivalent de ce dernier, FR-A-2.334.401, un filtre de ce type se compose d'une série d'éléments filtrants disposés de manière annulaire autour d'un distributeur, lesdits éléments filtrants étant entraînés en rotation autour dudit distributeur en vue de traverser un cycle opératoire complet, ainsi que d'un distributeur récoltant et répartissant les fluides provenant des éléments filtrants qui y sont reliés. Les distributeurs de ces filtres connus comprennent essentiellement une partie distributrice et une partie collectrice glissant l'une par rapport à l autre, la partie collectrice étant divisée en chambres et compartiments isolés délimités par des cloisons et en communication avec un ou plusieurs dispositifs d'aspiration et d'évacuation des gaz et liquides, lesdites chambres communiquant chacune avec un dispositif d'aspiration ou de pression. La partie distributrice comporte, en correspondance avec chacun des éléments filtrants, des alvéoles débouchant successivement, au cours du mouvement cyclique, en regard de chacun des compartiments et chambres de manière que chaque élément soit mis successivement en communication avec chacun desdits compartiments et chambres.

Ces filtres équipés des distributeurs connus présentent cependant de nombreux inconvénients.

D'une part, l'encombrement des dispositifs de type connu est assez important, étant donné qu'on est en présence de compartiments en forme de récipients individuels combinés avec des conduits de soutirage et autres.

D'autre part, la séparation des gaz et des liquides est souvent peu satisfaisante, étant donné que cette séparation doit généralement s'effectuer dans de petits volumes avec des changements de direction inférieurs à 180°.

Le document FR-A-2 334 401 décrit, en particulier par l'exemple de réalisation illustré aux figures 4 et 5, un filtre industriel à cellules comprenant une série de cellules filtrantes ainsi qu'un distributeur destiné à récolter et à régler la répartition des fluides traversant la surface filtrante desdites cellules.

Dès l'entrée dans un compartiment du mélange gaz/liquide provenant de l'une des cellules de filtration, le liquide tombe par inertie et par gravité sur le fond du compartiment puis s'engouffre par l'orifice de décharge tandis que les gaz soumis d'emblée à la dépression du circuit de vide d'aspiration se déchargent latéralement, avec un changement de direction d'environ 90°, par les passages vers l'espace vide ménagé dans la partie centrale de la base fixe du distributeur et prolongé vers le haut dans l'espace annulaire libre dans la tête rotative de ce distributeur; le fond de la partie collectrice est incliné; la paroi verticale séparant cette partie collectrice en compartiments est interrompue directement au-dessus du fond incliné, ce qui a pour conséquence que le passage du filtrat d'un compartiment à un autre se fait toujours automatiquement.

Par ailleurs, le réglage précis de la présuccion est très difficile, voire impossible. On entend par présuccion une première filtration où l'on recueille le premier filtrat trouble lors de la constitution du gâteau de filtration.

On a également proposé, dans le document de brevet FR-A-999.442, de disperser la chambre de séparation des gaz extérieurement au distributeur proprement dit. Cette solution ne résoud cependant pas tous les problèmes de manière satisfaisante et l'encombrement reste toujours important.

Le but de la présente invention vise, par conséquent, un filtre continu rotatif sous vide à plan de filtration horizontal, dont le distributeur présente une construction plus compacte permettant un gain de place, ou, pour un encombrement similaire à celui des filtres connus, un fonctionnement avec des volumes de compartiments tampons des filtrats nettement supérieurs. Par ailleurs, on cherche également à améliorer la séparation des gaz et des liquides ainsi qu'à fournir une possibilité de réglage plus aisé de la présuccion et l'adjonction de fonctions annexes.

Avantageusement, la chambre de séparation des gaz prolonge la partie centrale de la cuve cylindrique de la partie collectrice, et la séparation gaz/liquides se fait dans la partie supérieure de la partie collectrice pour être parfaite dans la chambre de séparation tronconique surmontant la partie collectrice.

Par conséquent, la présente invention porte sur un filtre rotatif sous vide à plan de filtration sensiblement horizontal, comprenant des éléments filtrants et un distributeur récoltant et répartissant les fluides provenant des éléments, ce distributeur comprenant essentiellement une partie distributrice et une partie collectrice glissant l'une par rapport à l'autre en un mouvement cyclique, la partie collectrice consistant en une cuve unique fixe généralement cylindrique et comportant au moins deux compartiments communiquant avec un dispositif d'aspiration et d'évacuation pour la séparation des gaz et liquides et étant disposée en dessous de ladite partie distributrice mobile en étant adaptée à celle-ci; la partie distributrice comporte en correspondance avec chacun des éléments, des alvéoles débouchant successivement, au cours du mouvement cyclique, en regard de chacun des compartiments éventuels, de manière qu'au cours de chaque cycle, chaque élément filtrant soit mis successivement en communication avec chaque compartiment; ledit distributeur comporte également une chambre séparatrice munie d'au moins un conduit d'évacuation des gaz séparés des filtrats, qui prolonge la partie centrale de la partie collectrice; un espace annulaire est disposé à la partie supérieure de la partie collectrice de manière à y amener substantiellement verticalement les filtrats venant par l'embouchure des alvéoles reliées aux éléments filtrants; ledit espace annulaire est limité vers l'intérieur par une paroi intérieure verticale formée par la partie inférieure de la chambre séparatrice et vers l'extérieur par la paroi extérieure de la partie collectrice; lesdits compartiments sont séparés par des parois radiales verticales, et la paroi séparant un premier compartiment d'un deuxième compartiment présente une ouverture de passage d'un compartiment à l'autre, disposée à un niveau qui permet le passage du filtrat dans un sens imposé, d'un compartiment à l'autre, par débordement. La distance entre l'extrémité inférieure de la paroi intérieure de l'espace annulaire et l'arête inférieure de l'ouverture pratiquée dans la paroi radiale verticale, au-dessus de la partie inférieure de ladite paroi est suffisante pour permettre la séparation des gaz, qui sont soumis à un changement de direction de l'ordre de 180°, lors de la chute verticale du liquide dans la partie collectrice.

Selon une forme d'exécution particulièrement préférée de la présente invention, la partie collectrice est divisée en au moins trois compartiments séparés par des parois radiales verticales, la paroi séparant un premier compartiment d'un deuxième compartiment et la paroi séparant ledit deuxième compartiment d'un troisième compartiment présentant chacune une ouverture de passage d'un compartiment à l'autre, disposée à un niveau qui permet le passage du filtrat dans un sens imposé, d'un compartiment à l'autre, par débordement. Avantageusement, chaque compartiment comporte à son fond des ouvertures d'évacuation vers l'alimentation de pompes à filtrat. Avantageusement, la partie collectrice du distributeur comporte au moins un secteur d'opérations annexes disposé dans l'espace annulaire et délimité par la paroi extérieure, par la paroi intérieure, par une paroi horizontale fermant le secteur annulaire par le bas ainsi que par des parois latérales. La partie collectrice peut comporter un secteur d'opérations annexes, destinées à une première filtration et comportant une ouverture d'admission réglée au moyen d'un clapet basculable et une ouverture d'évacuation rejetant le liquide recueilli dans un des compartiments de la partie collectrice.

De cette manière, on combine les divers compartiments, les divers secteurs de séparation ainsi que les bacs de stockage de filtrat en un distributeur nettement plus compact. En outre, on a a sa disposition des volumes plus importants et la séparation des gaz et des liquides de filtration est sensiblement améliorée dans la chambre de séparation ainsi constituée.

Dans la forme d'exécution préférée dans laquelle la partie collectrice comporte au moins trois compartiments séparés par des parois radiales verticales, cette disposition permet de prévoir au moins un premier compartiment pour l' eau-mère, un deuxième compartiment pour le liquide du premier lavage et un troisième compartiment pour le liquide du deuxième lavage.

Avantageusement, la chambre de séparation peut encore comporter des garnitures faisant "chicane" en vue d'encore améliorer la séparation des liquides de la phase gazeuse.

Selon une forme d'exécution particulièrement préférée, la paroi séparant le compartiment contenant les eaux-mères de celui qui contient le liquide de premier lavage ainsi que la paroi séparant le compartiment contenant le liquide de premier lavage et celui qui contient le liquide de deuxième lavage, présentent chacune une ouverture de passage d'un compartiment à l'autre, disposée à un niveau qui permet le passage du filtrat dans un sens imposé, d'un compartiment à l'autre. Ainsi, le second lavage plus dilué peut déborder dans le premier lavage et celui-ci dans les eaux-mères.

D'autres avantages et détails de la présente invention apparaîtront plus clairement dans la description d'une forme d'exécution préférée de la présente invention, à l'appui des figures annexées dans lesquelles:

- les figures 1, 2 et 3 sont des vues schématiques, en perspective, en plan et en élévation d'un filtre rotatif à cellules basculantes de l'état de la technique ;

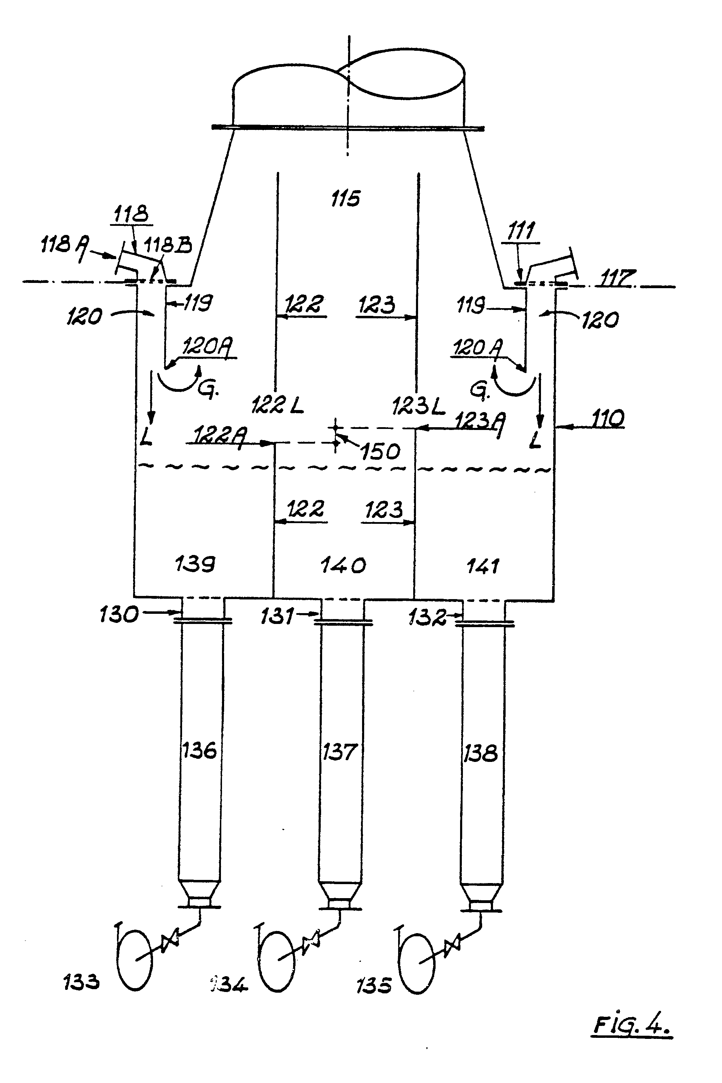

- la figure 4 est une vue schématique d'un distributeur selon la présente invention ;
- la figure 5 est une vue schématique en perspective des parties collectrice et séparatrice d'un distributeur selon la présente invention, les surfaces de friction et la coiffe tronconique n'étant pas représentées pour des raisons de clarté ;
- la figure 6 est une vue schématique partielle, en perspective de la partie collectrice du distributeur, montrant un détail permettant la mise en oeuvre d'opérations annexes;
- la figure 7 est une vue schématique en perspective montrant l'adaptation de la présuccion ; et
- la figure 8 est une vue latérale du clapet de présuccion.

Dans les différentes figures, les mêmes chiffres de référence désignent des éléments analogues ou identiques.

Bien que le présent mémoire descriptif s'appuie plus particulièrement sur l'exemple des filtres continus rotatifs à cellules, de préférence basculables, l'invention ne doit pas être considérée comme limitée à ces filtres continus rotatifs, mais elle s'applique en général aux distributeurs de filtres rotatifs sous vide à plan de filtration sensiblement horizontal d'autres types.

Les filtres comprennent en général une série d' unités de filtration appelées communément "cellules" qui subissent séparément, d'une façon discontinue, les opérations successives de filtration, lavages, traitements spéciaux divers, déchargement du gâteau formé sur la surface filtrante, lavage et séchage des cellules et de la toile filtrante. L'ensemble de ces diverses opérations se reproduit au cours de chacun des cycles du mouvement, l'ensemble des cycles constituant un processus global continu, intégré en une chaîne de filtration.

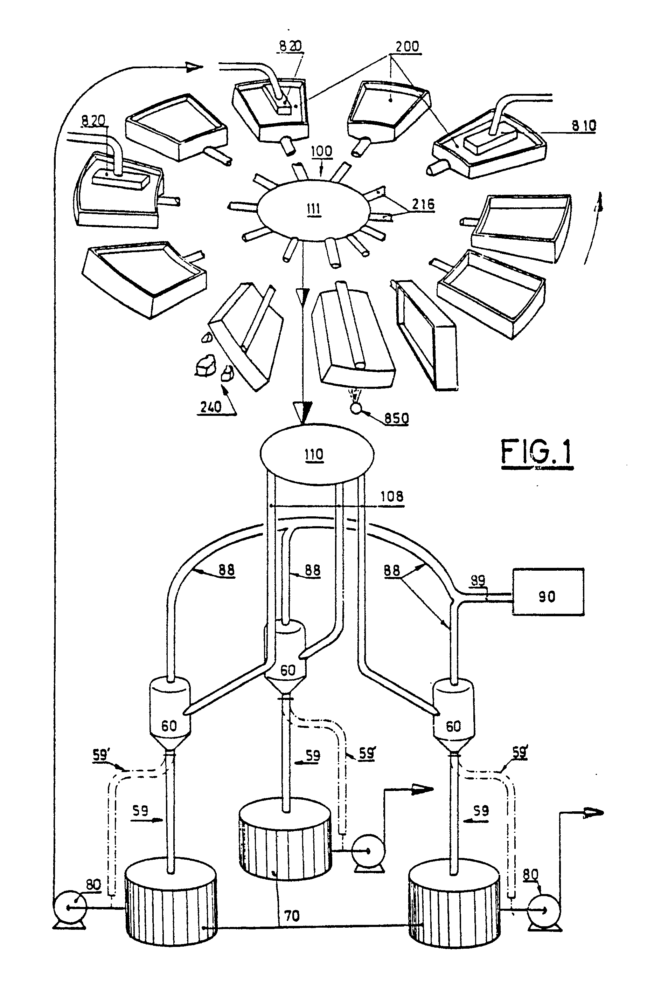

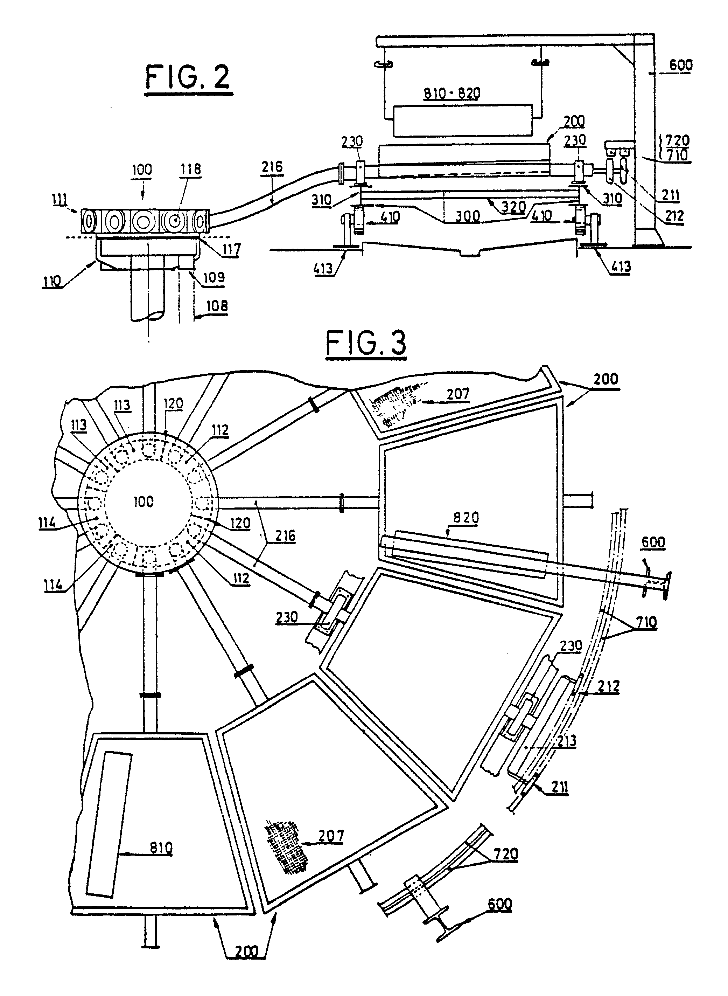

Un exemple d'une telle chaîne de filtration est schématisé à la figure 1, alors que d'autres détails d'un filtre correspondant ont été schématisés aux figures 2 et 3.

Un tel filtre comporte essentiellement :
a) un châssis tournant 300 composé de membrures circulaires 310 solidarisées par des bras de liaison radiaux 320 portant des cellules 200, par l'intermédiaire de paliers 230, ces membrures tournant sur deux séries de galets 410 fixés aux fondations et disposés en deux cercles concentriques, le mouvement restant centré par l'action de galets de centrage non représentés ;
b) un groupe moteur non représenté qui transmet le mouvement au châssis tournant par une crémaillère dentée, fixée à l'une des membrures circulaires 310 ;
c) des leviers de guidage des cellules 213 portant deux galets 211, 212 qui roulent sur des rails 710-720 attachés à une ossature périphérique 600 ;
d) des auges de répartition 810 et 820, suspendues à l' ossature 600 au-dessus des cellules et qui répartissent dans ces dernières la bouillie à filtrer et les liqueurs de lavage ;
e) un distributeur central 100, constitué essentiellement d'une part, par une tête distributrice circulaire rotative 111, qui comporte des alvéoles 118 disposés en cercle, reliés respectivement aux cellules 200 par des tuyaux souples 216 et qui tourne de concert avec le châssis 300 et les cellules 200, et, d'autre part, par une base collectrice circulaire fixe 110 qui comporte des chambres et des compartiments délimités par des cloisons, la tête rotative 111 glissant en rotation sur la base fixe 110 par l'intermédiaire d'un joint de friction plan étanche 117.

Les auges de répartition 810-820, situées en correspondance avec les cloisons, délimitent des secteurs successifs de filtration et de lavage, les liquides et gaz ayant traversé les lits filtrants des cellules de chacun de ces secteurs étant récoltés dans des compartiments, puis évacués par des tuyauteries correspondantes 108, vers des séparateurs 60, d'où les liquides sont déchargés par des tuyaux barométriques 59, dans des bacs de récolte 70, ou, comme montré en pointillé à la figure 1, par des tuyaux 59, vers des pompes d'aspiration 80, les gaz étant aspirés, de ces séparateurs, vers le haut, vers un circuit de vide 90 à travers un collecteur 88-89.

Les perfectionnements prévus par la présente invention regroupent les différents équipements référencés en 110, 108, 88, 60, 59 et 70 de façon à former un ensemble unique très compact de distribution, de séparation de différents fluides et de stockage de ceux-ci.

Comme dans le cas des distributeurs classiques, le dispositif de la présente invention comporte une tête distributrice mobile 111 avec autant d'alvéoles 118 qu'il y a d'éléments filtrants, ces alvéoles recevant,par leurs extrémités 118 A, reliées chacune à un élément par un tuyau souple 216 (figures 1 à 3), les fluides soutirés de ceux-ci et les déchargeant successivement par leurs extrémités 118 B dans les différents compartiments inférieurs à travers le joint de friction 117.

Les gaz et les liquides soutirés du filtre guidés par la paroi cylindrique 119 descendent verticalement dans la chambre annulaire 120. A la partie inférieure de la chambre 120,au point 120 A,les liquides (L) continuent leur trajet verticalement vers le bas, tandis que les gaz (G) subissent un changement de direction de 180° et sont aspirés vers le haut dans la chambre séparatrice 115.

La chambre séparatrice 115 peut avantageusement comporter des garnitures ou des parois jouant le rôle de "chicanes" en vue d'encore améliorer la séparation des liquides de la phase gazeuse.

Le plan supérieur 117 de l'espace annulaire 120 de distribution et séparation coincide avec le joint de friction 117.

Les parois radiales 122 et 123 respectivement entre la filtration des eaux-mères et du premier lavage et entre le premier lavage et le second lavage (le nombre de parois peut être différent de 2 suivant le nombre de lavages) se prolongent dans la chambre de séparation 115.

Avantageusement. les parois radiales 122 et 123 sont réglables angulairement, la paroi 124 étant fixe, de sorte que la coupure entre les filtrats de différentes densités soit nette et correcte. Le blocage et la commande peuvent se faire par tout moyen connu en soi,du moment que l'étanchéité entre les compartiments soit assurée.

Selon une variante, les parois 122 et 123 comportent une ouverture ménagée (122 L et 123 L) au-dessus de la partie inférieure des parois contenant normalement les filtrats de façon à permettre les passages des filtrats d'un compartiment à l'autre mais dans un sens imposé, ainsi le second lavage plus dilué pourrait déborder dans le premier lavage et celui-ci dans les eaux-mères, ce qui est réalisé en ayant l'arête 123 A à un niveau supérieur à l'arête 122 A d'une distance 150.

La paroi 124 qui sépare le dernier filtrat (ici second lavage) des eaux-mères s'étend au moins sur toute la hauteur de la cuve et empêche toute communication entre le filtrat le plus dilué et les eaux-mères.

Les secteurs cylindriques recevant et contenant les filtrats (139, 140, 141) sont munis à leur partie inférieure de tubulures 130, 131, 132 d'alimentation des pompes à filtrats 133, 134, 135 via les tuyauteries 136, 137, 138.

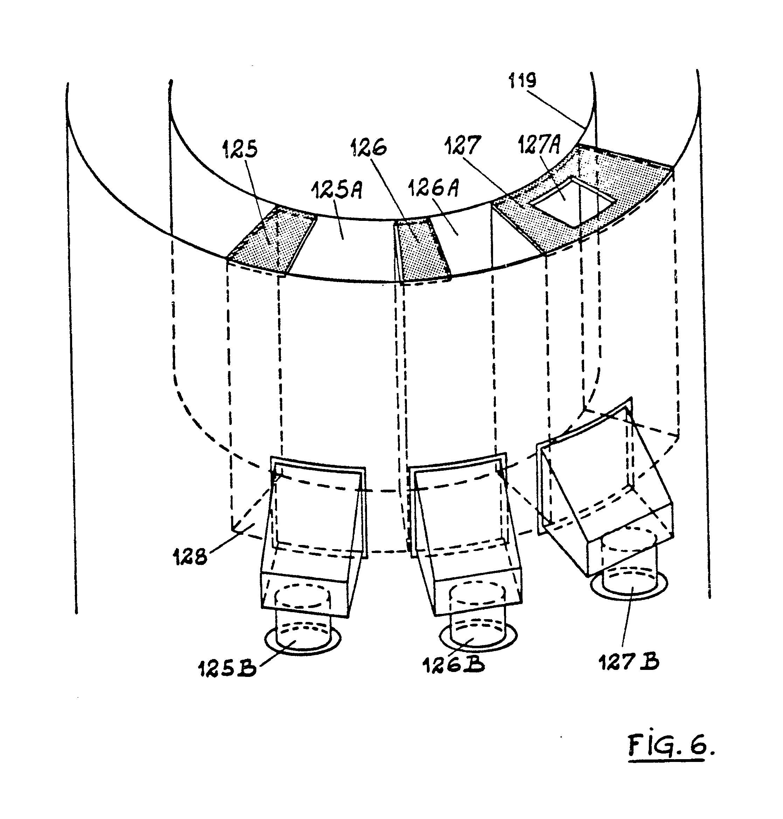

On a également fait figurer (figure 6) les cloisons de fin 125 et de début 127 de filtration sous vide entre lesquelles se situe un secteur annulaire 129 au moyen duquel peuvent s'effectuer les opérations annexes de soufflage du gâteau, séchage de la toile et drainage de l'eau résiduelle, par exemple.

Ce secteur annulaire 129 est isolé de la cuve par une paroi horizontale 128 de telle façon que les fluides y transitant doivent être soutirés ou introduits latéralement (125B, 126B, 127B), de sorte que, à l'exception de cet espace annulaire, tout le volume de la cuve est disponible pour les filtrats sous vide. Ledit secteur annulaire est à cheval sur la paroi verticale 124 séparant les eaux-mères du dernier filtrat de lavage. Ledit secteur 129 comporte, bien entendu autant de chambres qu' il y a d'opérations annexes à effectuer.

La figure 6 montre le secteur dévolu aux opérations annexes et isolé des secteurs de filtration sous vide par les cloisons 125 et 127.

Les opérations annexes peuvent être successivement :
- le soufflage d'air à travers l'ouverture 125A en vue de faciliter le déchargement du gâteau de filtration et le lavage des tissus filtrants ;
- l'aspiration d'air à travers l'ouverture 126A en vue de sécher les tissus filtrants.

En outre, dans la cloison 127 correspondant à l'opération d'alimentation de bouillie dans les cellules est aménagée une ouverture 127A permettant un complément de drainage de l'eau résiduelle s'écoulant des cellules.

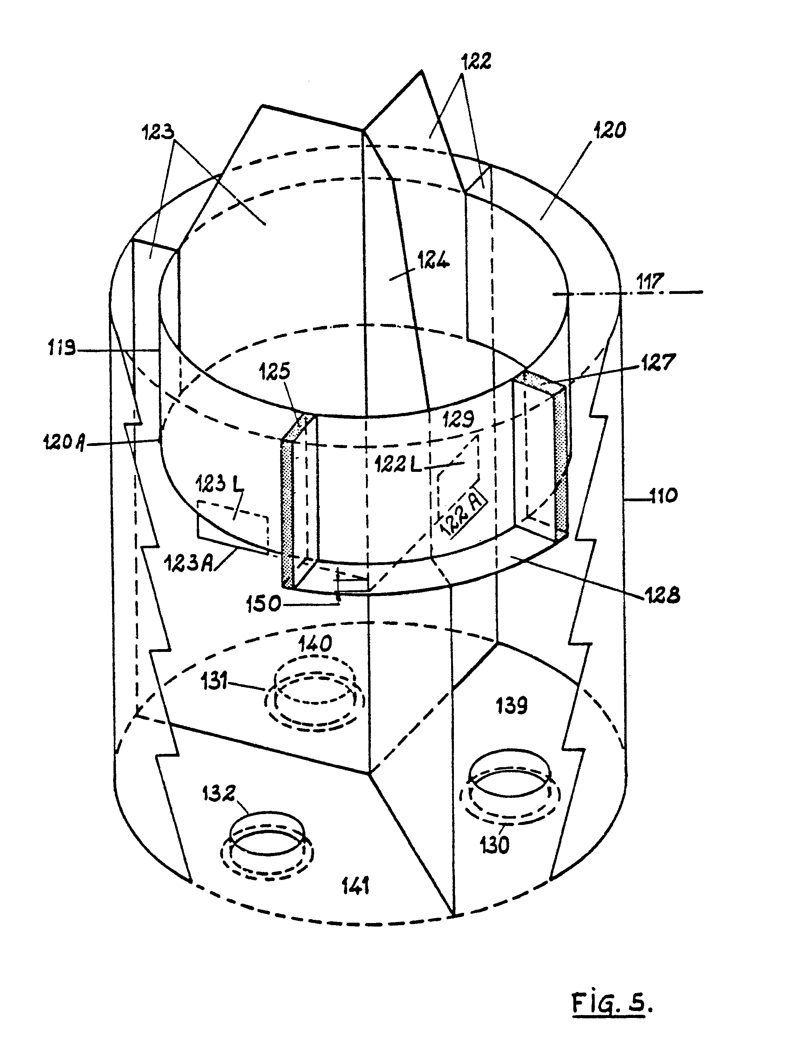

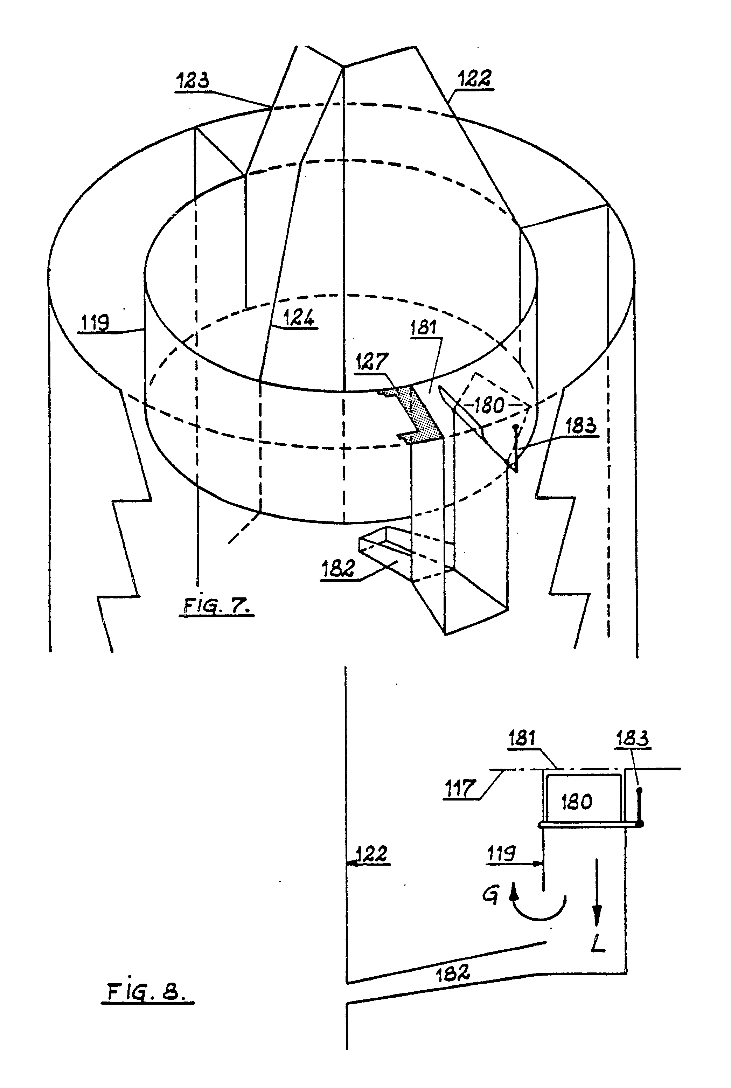

Un autre dispositif peut être également prévu dans la partie cylindrique du distributeur, il s'agit d'une section de première filtration appelée présuccion où l'on recueille le premier filtrat trouble lors de la constitution du gâteau de filtration. Cette première section de présuccion est installée dans le compartiment des eaux-mères suivant les figures 7 et 8. Le premier liquide recueilli passe à travers l'ouverture réglable 181 et rejoint,après avoir été séparé du gaz qui l'accompagne, par le conduit 182, le compartiment de premier lavage situé entre les parois 122 et 123 (figure 5).

Le réglage de l'ouverture 181 peut se faire par basculement du clapet 180 au moyen d'un levier 183, par exemple, manoeuvré depuis l'extérieur de la partie collectrice.

On constate, à la lecture du présent mémoire descriptif que le filtre sous vide rotatif à plan de filtration horizontal, équipé d'un distributeur selon l'invention présente un avantage important par rapport aux dispositifs existants, qui consiste en ce que la séparation des gaz et des liquides de filtration est sensiblement améliorée grâce à un changement de direction de l' ordre de 180° et grâce à un volume disponible plus grand qui est tel que le niveau de liquide dans les compartiments est assez bas. Les sections de passage des gaz et des liquides sont fortement agrandies et les vitesses de circulation sont fortement diminuées, améliorant ainsi les séparations entre les gaz et les liquides.

Par ailleurs, le volume des compartiments est suffisant pour pouvoir y connecter directement des pompes d'extraction sans devoir passer par des bacs auxiliaires. De ce fait, on peut travailler sans descentes barométriques d'une hauteur en relation avec le vide appliqué et installer le filtre à un niveau inférieur, pour autant que l'on utilise des pompes aspirantes.

Il faut également noter que l'ensemble compact de la partie collectrice permet d'éviter le refroidissement et les cristallisations ainsi que les incrustations qui en sont la conséquence ; ce qui rend l'entretien plus aisé et moins fréquent, et par conséquent moins onéreux.

Dans le cas de filtrats dégageant des vapeurs gênantes ou nocives, la suppression des bacs de stockage 70 des filtrats fait que l'on n'a plus besoin de dispositif de ventilation pour cette partie de l'installation.

## Revendications

1. Filtre rotatif sous vide à plan de filtration sensiblement horizontal comprenant des éléments filtrants (200) et un distributeur (100) récoltant et répartissant les fluides provenant des éléments (200), ce distributeur (100) comprenant essentiellement une partie distributrice (111) et une partie collectrice (110) glissant l'une par rapport à l'autre en un mouvement cyclique, la partie collectrice (110) consistant en une cuve unique fixe généralement cylindrique et comportant au moins deux compartiments (139, 140, 141) communiquant avec un dispositif d'aspiration et d'évacuation pour la séparation des gaz et liquides, et étant disposée en dessous de ladite partie distributrice (111) mobile en étant adaptée à celle-ci, la partie distributrice (111) comportant, en correspondance avec chacun des éléments (200), des alvéoles (118) débouchant successivement, au cours du mouvement cyclique, en regard de chacun des compartiments (139, 140, 141) éventuels, de manière que, au cours de chaque cycle, chaque élément filtrant (200) soit mis successivement en communication avec chaque compartiment (139, 140, 141), ledit distributeur (100) comportant également une chambre séparatrice (115) munie d'au moins un conduit d'évacuation des gaz séparés des filtrats, qui prolonge la partie centrale de la partie collectrice (110), un espace annulaire (120) étant disposé à la partie supérieure de la partie collectrice (110) de manière à y amener substantiellement verticalement les filtrats venant par l'embouchure des alvéoles (118 B) relies aux éléments filtrants (200), ledit espace annulaire (120) étant délimité vers l'intérieur par une paroi intérieure verticale (119) formée par la partie inférieure de la chambre séparatrice (115) et vers l'extérieur par la partie supérieure de la paroi extérieure de la partie collectrice (110), lesdits compartiments (139, 140, 141) étant séparés par des parois radiales verticales (122, 123, 124), et la paroi (123) séparant un premier compartiment (141) d'un deuxième compartiment (140) présentant une ouverture (123L) de passage d'un compartiment à l'autre, disposée à un niveau qui permet le passage du filtrat dans un sens imposé, d'un compartiment à l'autre, par débordement, la distance entre l'extrémité inférieure (120A) de la paroi intérieure (119) de l'espace annulaire (120) et l'arête inférieure (123A) de l'ouverture (123L) pratiquée dans la paroi radiale verticale (123), au-dessus de la partie inférieure de ladite paroi(123), étant suffisante pour permettre la séparation des gaz, qui sont soumis à un changement de direction de l'ordre de 180°, lors de la chute verticale du liquide dans la partie collectrice (110).

2. Filtre suivant la revendication 1 caractérisé en ce qu'il comporte au moins trois compartiments (139, 140, 141) séparés par des parois radiales verticales (122, 123, 124), la paroi (123) séparant un premier compartiment (141) d'un deuxième compartiment (140) et la paroi (122) séparant ledit deuxième compartiment (140) d'un troisième compartiment (139) présentant chacune une ouverture de passage (123 L, 122 L) d'un compartiment à l'autre, disposée à un niveau qui permet le passage du filtrat dans un sens imposé d'un compartiment à l'autre, par débordement.

3. Filtre suivant l'une quelconque des revendications 1 ou 2 caractérisé en ce que chaque compartiment (139, 140, 141) comporte en son fond des ouvertures d'évacuation (130, 131, 132) vers l'alimentation (136, 137, 138) de pompes à filtrat (133, 134, 135).

4. Filtre suivant l'une quelconque des revendications 1 à 3 caractérisé en ce que la partie collectrice (110) du distributeur (100) comporte au moins un secteur d'opérations annexes (129) disposé dans l'espace annulaire (120) et délimité par la paroi extérieure, par la paroi intérieure (119), par une paroi horizontale (128) fermant le secteur annulaire par le bas ainsi que par des parois latérales.

5. Filtre suivant l'une quelconque des revendications précédentes caractérisé en ce que la partie collectrice (110) comporte un secteur d'opérations annexes, destiné à une premier filtration et comportant une ouverture d'admission (181) réglée au moyen d'un clapet basculable (180) et une ouverture d'évacuation (182) rejetant le liquide recueilli dans un des compartiments (140) de la partie collectrice (110).

## Claims

1. Rotary vacuum filter with a substantially horizontal filtration plane, comprising filter elements (200) and a distributor (100) collecting and distributing the fluids coming from the elements (200), this distributor (100) comprising essentially a distributing part (111) and a collecting part (110) sliding relative to one another in a cyclic movement, the collecting part (110) being composed of a single generally cylindrical fixed tank and having at least two compartments (139, 140, 141) communicating with a suction and discharge device for the separation of gases and liquids, and being located underneath the said movable distributing part (111), and being matched to the latter, the distributing part (111) incorporating, to match each of the elements (200), cavities (118) which, during the cyclic movement, open in succession opposite each of the possible compartments (139,140,141), so that, during each cycle, each filter element (200) is successively put in communication with each compartment (139, 140,141), the said distributor (100) also comprising a separating chamber (115) provided with at least one pipe discharging the gases separated from the filtrates, which prolonges the central part of the collecting part (110), an annular space (120) being arranged in the upper part of the collecting part (110), so as to convey substantially vertically into the latter the filtrates arriving via the mouth of the cavities (118B) connected to the filter elements (200), the said annular space (120) being delimited towards the interior by an inner vertical wall (119) formed by the lower part of the separating chamber (115) and towards the exterior by the upper part of the outer wall of the collecting part (110), said compartments (139,140,141) being separated by radial vertical walls (122,123,124) and the wall (123) separating a first compartment (141) from a second compartment (140) having an orifice (123L) for passage from one compartment to the other, located at a level which allows the filtrate to pass in a prescribed direction from one compartment to the other, by overflowing, the distance between the lower end (120A) of the inner wall (119) of the annular space (120) and the lower edge (123A) of the orifice (123L) made in the vertical radial wall (123), above the lower part of the said wall (123), being sufficient to allow the separation of the gases, which are submitted to a change of direction of about 180°, during the vertical fall of the liquid into the collecting part (110).

2. Filter according to claim 1, characterised in that it comprises at least three compartments (139,140, 141) separated by vertical radial walls (122,123,124), the wall (123) separating a first compartment(141)from a second compartment (140) and the wall (122) separating the said second compartment (140) from a third compartment (139) each presenting an orifice (123L,122L) for passage from one compartment to the other, located at a level which allows the filtrate to pass, in a prescribed direction from one compartment to the other, by overflowing.

3. Filter according to any one of claim 1 or 2, characterised in that each compartment (139,140,141) comprises in its bottom orifices (130,131,132) for discharge towards the supply (136,137,138) of filtrate pumps (133,134,135).

4. Filter according to any one of claim 1 or 2 characterised in that the collecting part (110) of the distributor (100) incorporates at least a sector for ancillary operations (129), arranged in the annular space (120) and delimited by the outer wall, by the inner wall (119), by an horizontal wall (128) closing the annular sector at the bottom, as well as by lateral walls.

5. Filter according to any one of the preceding claims characterised in that the collecting part (110) incorporates a sector for ancillary operations, intended for a first filtration and comprising an admission orifice (181) adjusted by means of a tiltable flap (180) and a discharge orifice(182) returning the liquid collected in one of the compartments (140) of the collecting part.

**Patentansprüche**

1. Vakuumdrehfilter mit annähernd horizontaler Filtrationsebene, welches Filterelemente (200) und einen Verteiler (100) aufweist, welcher die von den Elementen (200) stammenden Fluide einsammelt und wieder verteilt, wobei dieser Verteiler (100) im wesentlichen einen Verteilerteil (111) und einen Sammelteil (110) aufweist, welche in einer zyklischen Bewegung in Bezug aufeinander gleiten, wobei der Sammelteil (110) aus einer einzigen feststehenden, im wesentlichen zylindrischen Wanne besteht und mindestens zwei Abteile (139, 140, 141) aufweist, welche mit einer Saug- und Evakuierungseinrichtung für die Separation der Gase und Flüssigkeiten kommunizieren, und unterhalb des genannten mobilen Verteilerteils (111) angeordnet ist, wobei er an jenen angepaßt ist, wobei der Verteilerteil (111) in Übereinstimmung mit jedem der Elemente (200) Zellen (118) aufweist, welche im Laufe der zyklischen Bewegung aufeinanderfolgend jedem der möglichen Abteile (139, 140, 141) gegenüberstehend auf die Art münden, daß im Laufe eines jeden Zyklus jedes Filterelement (200) nacheinander in Kommunikation mit jedem Abteil (139, 140, 141) gebracht wird, wobei der genannte Verteiler (100) auch eine Trennkammer (115) aufweist, welche mit mindestens einer Evakuierungsleitung, welche die zentrale Partie des Sammelteils (110) verlängert, für die von den Filtraten getrennten Gase versehen ist, wobei ein ringförmiger Raum (120) an der oberen Partie des Sammelteils (110) auf die Art angeordnet ist, um dort die Filtrate, welche durch die Mündung der mit den Filterelementen (200) verbundenen Zellen (118 B) kommen, im wesentlichen vertikal zu leiten, wobei der genannte ringförmige Raum (120) nach innen durch eine durch die untere Partie der Trennkammer (115) gebildete vertikale Innenwandung (119) und nach außen durch die obere Partie der Außenwandung des Sammelteiles (110) begrenzt ist, wobei die genannten Abteile (139, 140, 141) durch vertikale Radialwandungen (122, 123, 124) getrennt sind, und die Wandung (123) ein erstes Abteil (141) von einem zweiten Abteil (140) trennt, welche für den Durchgang von einem Abteil zum anderen eine Öffnung (123 L) aufweist, welche auf einem Niveau angeordnet ist, das die Passage des Filtrates in einer auferlegten Richtung, von einem Abteil zum anderen, durch Überfließen erlaubt, wobei der Abstand zwischen dem unteren Ende (120 A) der Innenwandung (119) des ringförmigen Raumes (120) und der unteren Kante (123 A) der Öffnung (123 L), welche in der vertikalen Radialwandung (123) oberhalb der unteren Partie der genannten Wandung (123) angebracht ist, ausreichend ist, um die Abtrennung der Gase, die einem Richtungswechsel in der Größenordnung von 180° unterworfen sind, beim vertikalen Fall der Flüssigkeit in den Sammelteil (110) zu erlauben.

2. Filter nach Anspruch 1, dadurch gekennzeichnet, daß es mindestens drei Abteile (139, 140, 141) aufweist, welche durch vertikale Radialwandungen (122, 123, 124) getrennt sind, wobei die Wandung (123), die ein erstes Abteil (141) von einem zweiten Abteil (140) trennt, und die Wandung (122), die das genannte zweite Abteil (140) von einem dritten Abteil (139) trennt, jeweils eine Durchgangsöffnung (123 L, 122 L) von einem Abteil zum anderen aufweisen, welche an einem Niveau angeordnet sind, das den Durchgang des Filtrates in einer auferlegten Richtung, von einem Abteil zum anderen, durch Überlaufen erlaubt.

3. Filter nach einem der Ansprüche 1 oder 2, dadurch gekennzeichnet, daß jedes Abteil (139, 140, 141) in seinem Boden Evakuierungsöffnungen (130, 131, 132) in Richtung der Zuleitung (136, 137, 138) von Filtratpumpen (133, 134, 135) aufweist.

4. Filter nach einem der Ansprüche 1 bis 3, dadurch gekennzeichnet, daß der Sammelteil (110) des Verteilers (100) mindestens einen Sektor für angefügte Arbeitsgänge (129) aufweist, welcher im ringförmigen Raum (120) angeordnet und durch die Außenwandung, durch die Innenwandung (119), durch eine den ringförmigen Sektor von unten schließende Horizontalwandung (128) sowie durch Seitenwandungen begrenzt ist.

5. Filter nach einem der vorhergehenden Ansprüche, dadurch gekennzeichnet, daß der Sammelteil (110) einen Sektor für angefügte Arbeitsgänge aufweist, welcher für ein erstes Filtrieren bestimmt ist, und eine mittels einer kippbaren Klappe (180) gesteuerte Zugangsöffnung (181) und eine Evakuierungsöffnung (182) aufweist, welche die empfangene Flüssigkeit in eines der Abteile (140) des Sammelteiles (110) zurücksprüht.

FIG.1

# FIG. 2

# FIG. 3

10

FiG. 4.

FIG. 5.

FiG. 6.

FIG. 7.

FIG. 8.

14